# NEUE EUROPÄISCHE PATENTSCHRIFT

(11) **EP 3 337 996 B2**
(45) Veröffentlichungstag und Bekanntmachung des Hinweises auf die Entscheidung über den Einspruch: **18.02.2026**
(45) Hinweis auf die Patenterteilung: 29.07.2020
(21) Anmeldenummer: 16766480.4
(22) Anmeldetag: 19.08.2016
(51) Int. Cl.: F16D 21/06, B60K 1/00

(54) **KUPPLUNGSEINRICHTUNG FÜR HYBRIDANTRIEB**
CLUTCH DEVICE FOR A HYBRID DRIVE SYSTEM
DISPOSITIF D'EMBRAYAGE POUR MOTORISATION HYBRIDE

(30) Priorität: 20.08.2015 DE 102015215897
(43) Veröffentlichungstag der Anmeldung: 27.06.2018
(73) Patentinhaber: Schaeffler Technologies AG & Co. KG, 91074 Herzogenaurach (DE)
(72) Erfinder: LORENZ, Elmar, 77836 Rheinmünster Söllingen (DE)
(74) Vertreter: DTS Patent- und Rechtsanwälte PartmbB
(86) Internationale Anmeldenummer: PCT/DE2016/200388
(87) Internationale Veröffentlichungsnummer: WO 2017/028864

(56) Entgegenhaltungen:
- WO-A1-2014/012543
- CN-A- 102 414 040
- DE-A1- 102009 024 217
- DE-A1- 102009 059 944
- DE-A1- 102013 200 408

## Beschreibung

Die Erfindung betrifft eine Kupplungseinrichtung. Insbesondere betrifft die Erfindung eine Kupplungseinrichtung für einen Hybridantrieb.

Ein Kraftfahrzeug verfügt über einen ersten Antriebsmotor, der als elektrische Maschine ausgeführt ist, und einen zweiten Antriebsmotor, der als Verbrennungsmotor ausgeführt ist. Der Antrieb des Kraftfahrzeugs kann hybrid, also in einer beliebigen Kombination des ersten und/oder zweiten Antriebsmotors, erfolgen. Dazu ist zwischen den Antriebsmotoren und einem Getriebe des Kraftfahrzeugs eine Kupplungseinrichtung vorgesehen.

DE 10 2009 059 944 A1 betrifft eine Kupplungseinrichtung für ein hybrid antreibbares Kraftfahrzeug.

Um eine Torsionsschwingung, die durch den Verbrennungsmotor in den Antriebsstrang eingebracht werden können, möglichst nicht über den Antriebsstrang auszubreiten, wird üblicherweise ein Federdämpfer verwendet. Dieser hat jedoch einen begrenzten Einsatzbereich und kann feine Schwingungen insbesondere dann schlecht isolieren, wenn das zu übertragende Drehmoment hoch ist, sodass die Feder des Federdämpfers bereits hoch beansprucht ist, sodass eine Rückstellkraft groß ist.

Der Erfindung liegt die Aufgabe zu Grunde, eine verbesserte Kupplungseinrichtung, insbesondere zur Verwendung in einem Hybridantrieb, anzugeben. Die Erfindung löst diese Aufgabe mittels des Gegenstands des unabhängigen Anspruchs. Unteransprüche geben bevorzugte Ausführungsformen wieder.

Eine Kupplungseinrichtung umfasst eine erste und eine zweite Eingangsseite sowie eine erste und eine zweite Ausgangsseite, wobei die Eingangsseiten und die Ausgangsseiten um eine gemeinsame Drehachse drehbar sind. Ferner umfasst die Kupplungseinrichtung eine erste Kupplung zwischen der ersten Eingangsseite und der ersten Ausgangsseite und eine zweite Kupplung zwischen der ersten Eingangsseite und der zweiten Ausgangsseite. Zwischen der ersten Eingangsseite und der zweiten Eingangsseite ist eine dritte Kupplung vorgesehen und es ist ein Fliehkraftpendel vorgesehen.

Das Fliehkraftpendel kann vorteilhaft Drehungleichförmigkeiten im Bereich der Kupplungseinrichtung dämpfen bzw. tilgen. Die Kupplungseinrichtung kann dadurch insbesondere in Verbindung mit einem Verbrennungsmotor, beispielsweise in einem Antriebsstrang eines Kraftfahrzeugs, verbessert eingesetzt werden. Ein zur Verfügung stehender Bauraum, der insbesondere durch eine glockenförmige Geometrie eines Getriebes gegeben sein kann, mit dem die Kupplungseinrichtung verbunden werden kann, ist dadurch verbessert ausnutzbar.

Bevorzugterweise ist das Fliehkraftpendel mit der Eingangsseite verbunden. Dadurch kann ein stabiler und kompakter Aufbau der Kupplungseinrichtung erzielt werden. Eine Schwungmasse oder ein Zwei-Massen-Schwungrad, die zwischen einer der Eingangsseiten und einem Verbrennungsmotor vorgesehen sein können, können in ihrer Wirkung durch die Kupplungseinrichtung unterstützt sein.

Die erste und die zweite Kupplung der Kupplungseinrichtung sind axial versetzt. Die dritte Kupplung liegt bevorzugt axial versetzt zu den anderen beiden Kupplungen, kann jedoch auch radial versetzt zu wenigstens einer davon angebracht sein.

Das Fliehkraftpendel kann axial außerhalb der ersten und der zweiten Kupplung, und bevorzugterweise auch der dritten Kupplung, angeordnet sein. Das Fliehkraftpendel kann in unterschiedlichen Ausführungsformen auf einer beliebigen axialen Seite der ersten und der zweiten Kupplung angeordnet sein. In einer ersten Variante liegt das Fliehkraftpendel auf einer der zweiten Eingangsseite zugewandten axialen Seite der ersten, zweiten und gegebenenfalls dritten Kupplung, in einer zweiten Variante auf einer der zweiten Eingangsseite abgewandten axialen Seite. In einer weiteren Ausführungsform liegt die erste Eingangsseite auf der radialen Außenseite der ersten und der zweiten Kupplung, sodass das Fliehkraftpendel verbessert kraftschlüssig angeschlossen sein kann. Die erste Eingangsseite kann rotationssymmetrisch aufgebaut sein. Insbesondere kann die erste Eingangsseite als Kupplungskäfig für wenigstens eine der Kupplungen gebildet sein. Das Fliehkraftpendel kann in die erste Eingangsseite integriert oder direkt daran angebunden sein.

Das Fliehkraftpendel liegt bevorzugterweise radial außerhalb der ersten und der zweiten Kupplung. Dadurch kann eine Pendelmasse des Fliehkraftpendels auf einem wirkungsvoll großen Radius zur Drehachse angeordnet sein. Die Tilgungswirkung kann dadurch verbessert sein. Die Pendelmasse kann alternativ auch bei gleicher Wirkung gegenüber ein Pendelflansch mit kleinerem Radius verkleinert werden.

Die erste Eingangsseite liegt auf der radialen Außenseite der ersten und der zweiten Kupplung und ist mittels eines radialen Elements bezüglich der Drehachse abgestützt, das gleichzeitig einen Pendelflansch des Fliehkraftpendels bildet.

Es sind erfindungsgemäß zwei Fliehkraftpendel vorgesehen, die auf unterschiedlichen axialen Seiten der ersten und der zweiten Kupplung angeordnet sind. Die ausgleichende Wirkung der Fliehkraftpendel kann dadurch gesteigert sein und ein vorhandener Bauraum kann verbessert ausgenutzt werden.

Es ist bevorzugt, dass zumindest eine der Kupplungen und das Fliehkraftpendel in einem gemeinsamen Gehäuse angeordnet sind, das teilweise mit einem flüssigen Medium gefüllt ist. Insbesondere können alle drei Kupplungen zusammen mit dem Fliehkraftpendel in dem Gehäuse angeordnet sein. So können die Kupplungen und das Fliehkraftpendel verbessert miteinander integriert ausgeführt sein. Das flüssige Medium, insbesondere ein Öl, kann zur Kühlung, Reinigung und Schmierung von Kupplungskomponenten und des Fliehkraftpendels dienen.

Weiter ist bevorzugt, dass zur Betätigung der Kupplungen hydraulische Betätigungseinrichtungen vorgesehen sind. Wenigstens eine der Kupplungen wird bevorzugterweise hydraulisch betätigt. Die erste und die zweite Kupplung werden bevorzugterweise mittels des gleichen Prinzips betätigt, insbesondere beide hydraulisch. Die dritte Kupplung wird bevorzugterweise ebenfalls hydraulisch betätigt. Ein Betätigungsfluid einer hydraulischen Betätigungseinrichtung kann das flüssige Medium umfassen, mit dem das Gehäuse wenigstens teilweise gefüllt ist.

Die erste Eingangsseite kann zur Verbindung mit einem Läufer einer elektrischen Maschine eingerichtet sein. Insbesondere kann der Läufer radial außen von einem Ständer der elektrischen Maschine umgeben sein. Dadurch kann sich eine kompakte Antriebseinheit ergeben, die die Kupplungseinrichtung und die elektrische Maschine miteinander integriert.

Außerdem kann die zweite Eingangsseite zur Verbindung mit einer Abtriebswelle einer Brennkraftmaschine, insbesondere einem Verbrennungsmotor, beispielsweise nach dem Hubkolben-Prinzip, eingerichtet sein. Dadurch kann die Kupplungseinrichtung besonders gut für einen hybriden Antrieb, etwa in einem Kraftfahrzeug, verwendet werden.

Die Erfindung wird nun mit Bezug auf die beigefügten Figuren genauer beschrieben, in denen:
- Fig. 1: eine exemplarische Kupplungseinrichtung;
- Fig. 2: eine nicht beanspruchte Kupplungseinrichtung nach Figur 1 mit einem angeflanschten Fliehkraftpendel;
- Fig. 3: Eine nicht beanspruchte Kupplungseinrichtung nach Figur 1 mit einem integrierten Fliehkraftpendel;
- Fig. 4: eine Kupplungseinrichtung nach Figur 1 mit einem integrierten und einem angeflanschten Fliehkraftpendel; und
- Fig. 5: eine Kupplungseinrichtung nach Figur 1 mit zwei Fliehkraftpendeln nach einer weiteren Ausführungsform
darstellt.

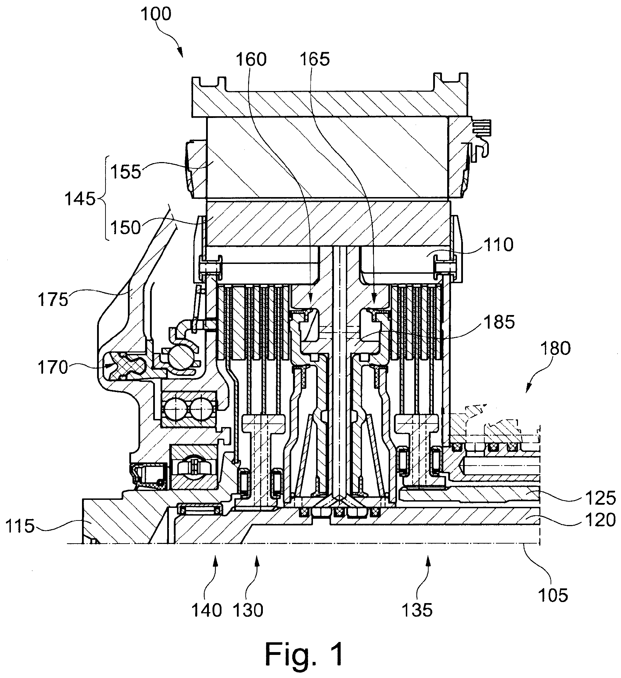

Figur 1 zeigt eine exemplarische Kupplungseinrichtung 100, welche hilfreich zum Verständnis der Erfindung ist. Um eine Drehachse 105 sind eine erste Eingangsseite 110, eine zweite Eingangsseite 115, eine erste Ausgangsseite 120 und eine zweite Ausgangsseite 125 angeordnet.

Eine erste Kupplung 130 liegt zwischen der ersten Eingangsseite 110 und der ersten Ausgangsseite 120, eine zweite Kupplung 135 zwischen der ersten Eingangsseite 110 und der zweiten Ausgangsseite 125 und eine optionale dritte Kupplung 140 zwischen der ersten Eingangsseite 110 und der zweiten Eingangsseite 115. Die ersten beiden Kupplungen 130 und 135 sind radial oder bevorzugterweise axial zueinander versetzt und bilden eine axiale Doppelkupplung. Die dritte Kupplung 140 ist bevorzugterweise axial zu wenigstens einer der beiden anderen Kupplungen 130 und 135 versetzt.

Die erste Eingangsseite 110 ist zur Verbindung mit einer elektrischen Maschine 145 eingerichtet, die allgemein einen Läufer 150 und einen Ständer 155 umfasst. Bevorzugterweise ist die elektrische Maschine 145 vom Typ des Innenläufers, wobei der Läufer 150 radial innerhalb des Ständers 155 liegt. Dabei ist weiter bevorzugt, dass der Ständer 155 wenigstens eine Magnetspule und der Läufer 150 wenigstens einen Permanentmagneten aufweist. Der Läufer 150 liegt bevorzugterweise radial außerhalb der Kupplungen 130, 135 und 140 und ist in der dargestellten Ausführungsform mittels Nieten mit der ersten Eingangsseite 110 verbunden. Die zweite Eingangsseite 115 ist bevorzugterweise zur Verbindung mit einer Brennkraftmaschine, insbesondere einem Verbrennungsmotor, weiter bevorzugt einer Hubkolbenmaschine, eingerichtet.

Die Ausgangsseiten 120 und 125 sind zur Verbindung mit Eingangswellen eines Doppelgetriebes (nicht dargestellt) eingerichtet. Das Doppelgetriebe ist üblicherweise dazu eingerichtet, jede der Eingangswellen mittels eines anderen Gangradpaars mit einer gemeinsamen Ausgangswelle zu koppeln. Ist der Antriebsstrang in einem Kraftfahrzeug angeordnet, kann die Ausgangswelle letztlich auf ein Antriebsrad des Kraftfahrzeugs wirken. Um eine Gangstufe auszuwählen wird in der Regel eine der Kupplungen 130 oder 135 geschlossen, während die jeweils andere Kupplung 130, 135 geöffnet wird. Bevorzugterweise umfasst das Doppelgetriebe an jeder Getriebewelle mehrere Gangradpaare, die jeweils eine Gangstufe realisieren. Ein Gangradpaar kann üblicherweise ein- oder ausgelegt werden, wenn es mit einer Ausgangswelle 120, 125 verbunden ist, dessen zugeordnete Kupplung 130, 135 gerade geöffnet ist.

Die Kupplungseinrichtung 100 ist insbesondere dazu eingerichtet, im Antriebsstrang eines Kraftfahrzeugs eingesetzt zu werden. Dabei kann das Kraftfahrzeug bevorzugterweise hybrid angetrieben werden, also alternativ durch den Verbrennungsmotor, durch die elektrische Maschine 145 oder durch beide Antriebsmotoren. Soll der Verbrennungsmotor genutzt werden, so wird die dritte Kupplung 140 geschlossen. Soll die elektrische Maschine 145 genutzt werden, so wird sie üblicherweise elektrisch derart angesteuert, dass Drehmoment umgesetzt werden kann. Beide Antriebsmotoren können sowohl positives als auch negatives Drehmoment in den Antriebsstrang einbringen. Die elektrische Maschine 145 kann auch kinetische Energie aus dem Antriebsstrang aufnehmen und in elektrische Energie umwandeln, die beispielsweise in einem Energiespeicher temporär gespeichert werden kann. Durch ihren kompakten Aufbau eignet sich die Kupplungseinrichtung 100 insbesondere zum Einbau vorne quer in einem Kraftfahrzeug.

Der ersten Kupplung 130 ist eine erste Betätigungseinrichtung 160, der zweiten Kupplung 135 eine zweite Betätigungseinrichtung 165 und der dritten Kupplung 140 eine dritte Betätigungseinrichtung 170 zugeordnet. Bevorzugterweise arbeiten alle drei Betätigungseinrichtungen 160, 165 und 170 hydraulisch und sind jeweils dazu eingerichtet, eine axiale Betätigungskraft auf eine der Kupplungen 130, 135 und 140 auszuüben, sodass Reibelemente der Kupplungen 130, 135 oder 140 axial aneinander gepresst werden, um einen Reibschluss zu erzeugen und ein Drehmoment zwischen den Reibelementen zu übertragen. Bevorzugterweise werden die Reibelemente jeweils zwischen der zugeordneten Betätigungseinrichtung 160, 165, 170 und einem axialen Widerlager zusammengepresst. Weiterhin ist bevorzugt, dass die hydraulischen Betätigungseinrichtungen 160, 165 und 170 einzeln aktiv gesteuert werden können, indem etwa mittels eines Ventils oder eine Pumpe ein unter Druck stehendes Medium gezielt in einen hydraulischen Arbeitsraum der jeweiligen Betätigungseinrichtung 160, 165 oder 170 ein- oder aus ihm abgelassen wird. Alternativ dazu kann auch beispielsweise eine fliehölgesteuerte Betätigung vorgesehen sein.

Die drei Kupplungen 130, 135 und 140 sind bevorzugterweise in einem gemeinsamen Gehäuse 175 angeordnet, das wenigstens teilweise mit einem flüssigen Medium 180, insbesondere einem Öl, gefüllt sein kann. Das Medium 180 kann auch als Arbeitsmedium (hydraulisches Fluid) einer der Betätigungseinrichtungen 160, 165 und 170 verwendet werden. Die Kupplungen 130, 135 und 140 sind bevorzugterweise jeweils vom nasslaufenden Typ und können unabhängig voneinander als Einscheiben- oder Mehrscheibenkupplung ausgelegt sein. Weiter bevorzugt sind die erste Kupplung 130 und die zweite Kupplung 135 vom Mehrscheibentyp, um ein feinfühliges Öffnen und Schließen des Drehmomentflusses durch die Kupplungen 130, 135 zu erlauben. Die dritte Kupplung 140 kann auch wie dargestellt vom Einscheibentyp sein, wobei die dritte Kupplung 140 als Schaltkupplung ausgelegt sein kann, die möglichst nicht unter Schlupf betrieben wird.

In der dargestellten Ausführungsform befindet sich axial zwischen der ersten Kupplung 130 und der zweiten Kupplung 135 ein radialer Flansch 185 als Widerlager, gegen das die Kupplungen 130, 135 mittels der jeweils zugeordneten Betätigungseinrichtung 160, 165 gepresst werden können. Betätigungskräfte der Betätigungseinrichtungen 160, 165, 170 sind bevorzugterweise innerhalb der Kupplungseinrichtung 100 abgestützt, sodass keine resultierenden Kräfte nach außen abzustützen sind.

Soll die Kupplungseinrichtung 100 in einem Antriebsstrang ohne die elektrische Maschine 145 eingesetzt werden, kann die dritte Kupplung 140 auch entfallen. Die erste Eingangsseite 110 und die zweite Eingangsseite 115 fallen dann zusammen.

Es wird vorgeschlagen, an der Kupplungseinrichtung 100 ein Fliehkraftpendel anzubringen, um Ungleichförmigkeiten einer Drehbewegung, die durch die Kupplungseinrichtung 100 übertragen werden kann, zu tilgen. Diese Ungleichförmigkeiten können insbesondere eine Drehschwingung umfassen, die beispielsweise durch einen Hubkolben-Verbrennungsmotor bedingt sein kann, der mit der zweiten Eingangsseite 115 verbunden ist.

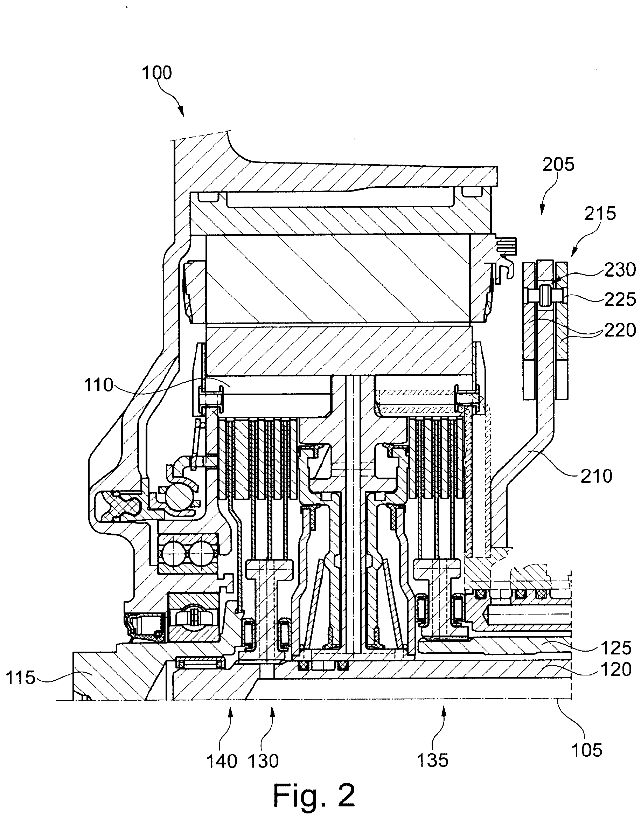

Figur 2 zeigt eine nicht beanspruchte Kupplungseinrichtung 100 nach Figur 1 mit einem angeflanschten Fliehkraftpendel 205. Hier wie auch in den anderen Figuren ist eine axiale Anordnung der ersten Kupplung 130 mit der zweiten Kupplung 135 angenommen, eine andere Anordnung, insbesondere eine radial versetzte Anordnung, sind ebenfalls möglich.

Die dritte Kupplung 140 ist beispielhaft zu den anderen beiden Kupplungen 130, 135 axial versetzt angeordnet.

Die zweite Eingangsseite 115 liegt bevorzugterweise den Ausgangsseiten 120, 125 axial bezüglich der Kupplungen 130, 135 gegenüber. Ein Fliehkraftpendel 205 ist an der ersten Eingangsseite 110 angebracht. Dabei liegt das Fliehkraftpendel bevorzugterweise axial versetzt zu den Kupplungen 130, 135 und gegebenenfalls auch 140.

Das Fliehkraftpendel 205 umfasst einen Pendelflansch, der drehstabil um die Drehachse 105 an der ersten Eingangsseite 110 befestigt ist, und eine Pendelmasse 215, die entlang einer vorbestimmten Pendelbahn, die sich in der Drehebene um die Drehachse 105 erstreckt, beweglich ist. Das dargestellte Fliehkraftpendel 205 ist vom außenliegenden Typ, wobei die Pendelmasse 215 zwei Pendelelemente 220 umfasst, die einander auf verschiedenen axialen Seiten des Pendelflanschs 210 gegenüber liegen. Bevorzugterweise sind die Pendelelemente 220 mittels eines Bolzens 225 aneinander befestigt, wobei sich der Bolzen 225 axial durch eine Nut 230 erstreckt, die in den Pendelflansch 210 eingebracht ist. So ist die Pendelmasse 215 nach Art einer Kulissenführung am Pendelflansch 210 beweglich gehalten.

In einer alternativen, innenliegenden Ausführungsform sind zwei axial versetzte Pendelflansche 210 vorgesehen, zwischen denen ein Pendelelement 220 verschiebbar angeordnet ist. Dabei kann wieder eine Befestigung nach Art einer Kulissenführung verwendet werden, bei der sich der Bolzen 225 vorzugsweise durch das einzige Pendelelement 220 und durch zwei zueinander korrespondierende Nuten 230 in den beiden Pendelflanschen 210 erstreckt. Kombinationen des innenliegenden mit dem außenliegenden Typ Fliehkraftpendel 210 sind ebenfalls an der Kupplungseinrichtung 100 einsetzbar.

Bevorzugterweise ist die Kupplungseinrichtung 100 derart ausgelegt, dass sie in etwa die gleiche Dämpfung aufweist wie ein Zwei-Massen-Schwungrad, das insbesondere zwischen der zweiten Eingangsseite 115 und einem Verbrennungsmotor angebracht werden kann.

In der dargestellten Ausführungsform ist das Fliehkraftpendel 205 auf der zweiten Eingangsseite 115 bezüglich der Kupplungen 130, 135 und gegebenenfalls 140 axial gegenüber liegenden Seite angeordnet; alternativ können das Fliehkraftpendel 205 und die Eingangsseite 115 jedoch auch auf der gleichen axialen Seite liegen. Weiter ist bevorzugt, dass das Fliehkraftpendel 205, und zwar genauer die Pendelmasse 215, radial außerhalb der Kupplungen 130, 135 und gegebenenfalls 140 liegt. Weiter innen liegende Ausführungsformen sind jedoch ebenfalls möglich.

Das dargestellte Fliehkraftpendel 205 ist an die Anordnung der Kupplungen 130, 135 und gegebenenfalls 140 axial angeflanscht, kann also von diesen demontiert werden. Eine kraftschlüssige Verbindung zwischen dem Fliehkraftpendel 205 und der ersten Eingangsseite 110 erfolgt bevorzugterweise durch Formschluss. Dabei kann der Kraftfluss, wie in Figur 2 dargestellt, zunächst vom Pendelflansch 210 aus radial nach innen bis in den Bereich einer radialen Lagerstelle der ersten Eingangsseite 110 und von dort wieder radial nach außen verlaufen. Alternativ kann auch eine direktere Verbindung in einem vorbestimmten radialen Abstand von der Lagerstelle vorgesehen sein.

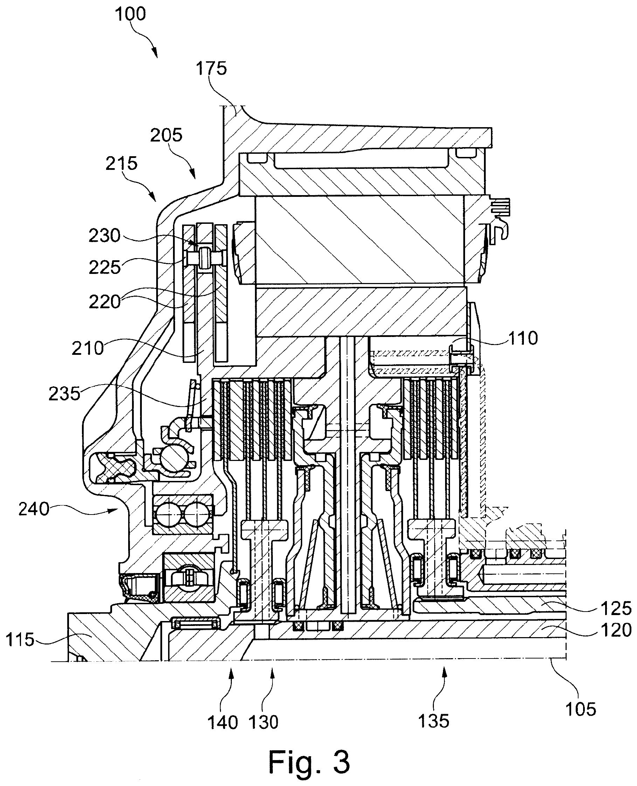

Figur 3 zeigt eine nicht beanspruchte Kupplungseinrichtung 100 nach Figur 1 mit einem integrierten Fliehkraftpendel 205. Im Unterschied zu der in Figur 2 dargestellten Ausführungsform liegt das Fliehkraftpendel 205 hier axial auf der gleichen Seite wie die zweite Eingangsseite 115 und damit den Ausgangsseiten 120, 125 der Kupplungen 130, 135 und gegebenenfalls 140 axial gegenüber. Bevorzugterweise ist das Fliehkraftpendel 205 wieder axial versetzt zu den Kupplungen 120 und 125, wenngleich es hier gegenüber der dritten Kupplung 140 nicht überdeckungsfrei axial versetzt ist.

Die erste Eingangsseite 110 ist in der Darstellung von Figur 2 links mittels eines radialen Stegs 235 und eines Lagers 240 radial gegenüber dem Gehäuse 175 gelagert, obwohl auch andere Lagerungen möglich sind. Das Lager 240 ist exemplarisch als doppelreihiges Kugellager ausgeführt. Der Steg 235 ist radial nach außen über die Eingangsseite 110 hinaus verlängert und geht in den Pendelflansch 210 über. Eine einstückige Ausführung ist bevorzugt, aber nicht zwingend erforderlich.

Bevorzugterweise fluchten der Steg 235 und der Pendelflansch 210, sodass radiale Kräfte verbessert übertragen werden können. Weiter bevorzugt liegt das Lager 240 axial möglichst fluchtend mit dem Steg 235, um radiale Kräfte auch hier gerade und auf einem kurzen Weg überleiten zu können.

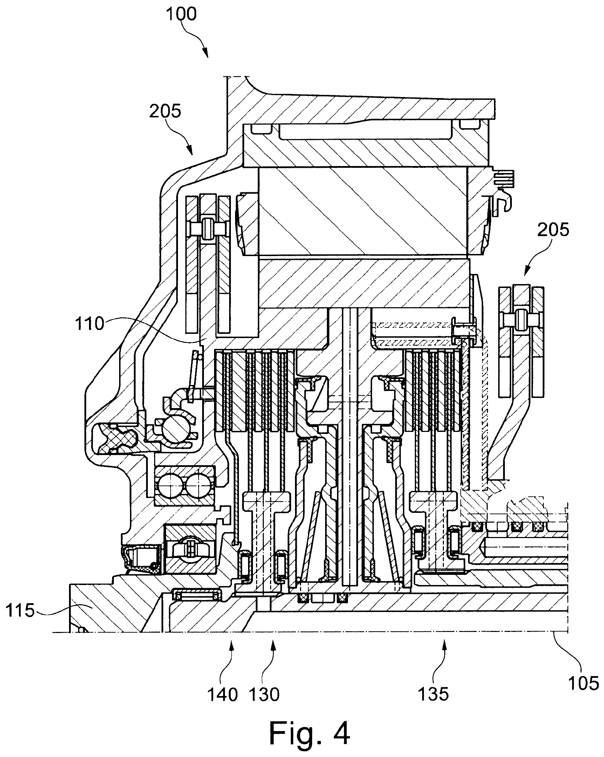

Figur 4 zeigt eine erfindungsgemäße Kupplungseinrichtung 100 nach Figur 1 mit einem integrierten Fliehkraftpendel 205 entsprechend der Ausführungsform von Figur 2 und einem angeflanschten Fliehkraftpendel 205 entsprechend der Ausführungsform von Figur 3. Bevorzugterweise liegen die Fliehkraftpendel einander axial bezüglich der Kupplungen 130, 135 und gegebenenfalls auch 140 axial gegenüber. Es können auch zwei angeflanschte Fliehkraftpendel 205 (vgl. Figur 2) oder zwei integrierte Fliehkraftpendel 205 (vgl. Figur 3) eingesetzt werden.

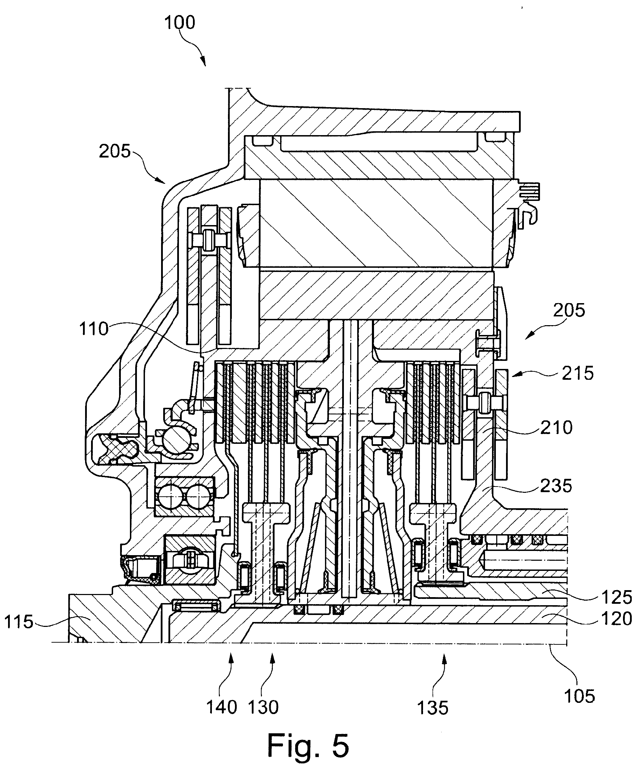

Figur 5 zeigt eine erfindungsgemäße Kupplungseinrichtung 100 nach Figur 1 mit zwei Fliehkraftpendeln 205 in einer weiteren Ausführungsform. Die erste Eingangsseite 110 weist hier auf der in der Darstellung von Figur 5 rechten Seite einen radialen Steg 235 auf, der die erste Eingangsseite 110 radial abstützt. Hier ist ein erstes Fliehkraftpendel 205 angeordnet, bevorzugterweise ist noch ein weiteres auf der linken Seite vorgesehen, das hier wie in den Ausführungsformen nach Figur 3 oder 4 ausgeführt ist. Das rechte Fliehkraftpendel 205 ist bevorzugterweise integriert mit dem radialen Steg 235 ausgeführt, indem der Steg 235 gleichzeitig als Pendelflansch 210 dient, an dem die Pendelmasse 215 angebracht ist. Radial innen ist der Steg 235 auf der rechten Seite bevorzugterweise gegenüber einer Entkopplungseinrichtung 505 abgestützt, die eine Führung von hydraulischem Fluid zu einer hydraulischen Betätigungseinrichtung 160, 165, 170 von der Drehbewegung der ersten Eingangsseite 110 entkoppelt.

Durch unterschiedliche Zusammenstellungen von Komponenten bzw. Merkmalen, die oben mit Bezug auf die Figuren 1 bis 5 beschrieben wurden, kann die Kupplungseinrichtung 100 variabel an einen vorgegebenen Einsatzzweck angepasst werden. Insbesondere kann es einfach sein, die Kupplungseinrichtung 100 in korrespondierenden Varianten mit und ohne dritte Kupplung 140 bereitzustellen. Damit kann die Kupplungseinrichtung 100 insbesondere an einem kleinen oder mittleren Kraftfahrzeug mit oder ohne elektrische Maschine 145, also bei Hybridantrieb oder klassischem Antrieb, eingesetzt werden. In beiden Varianten kann ein kompakter Aufbau der Kupplungseinrichtung 100 erzielt werden. Die zugkraftfreie Drehmomentübertragung beim Schalten eines Getriebes kann durch die Auslegung der Kupplungseinrichtung 100 als Doppelkupplung in Verbindung mit einem Doppelgetriebe genutzt werden.

### Bezugszeichenliste

- 100: Kupplungseinrichtung
- 105: Drehachse
- 110: erste Eingangsseite
- 115: zweite Eingangsseite
- 120: erste Ausgangsseite
- 125: zweite Ausgangsseite
- 130: erste Kupplung
- 135: zweite Kupplung
- 140: dritte Kupplung
- 145: elektrische Maschine
- 150: Läufer
- 155: Ständer
- 160: erste Betätigungseinrichtung
- 165: zweite Betätigungseinrichtung
- 170: dritte Betätigungseinrichtung
- 175: Gehäuse
- 180: flüssiges Medium
- 185: Flansch
- 205: Fliehkraftpendel
- 210: Pendelflansch
- 215: Pendelmasse
- 220: Pendelelement
- 225: Bolzen
- 230: Nut
- 235: Steg
- 240: Lager
- 505: Entkopplungseinrichtung

## Patentansprüche

1. Kupplungseinrichtung (100) mit:
- einer ersten (110) und einer zweiten Eingangsseite (115);
- einer ersten (120) und einer zweiten Ausgangsseite (125);
- wobei die Eingangsseiten (110, 115) und die Ausgangsseiten (120, 125) um eine gemeinsame Drehachse (105) drehbar sind;
- einer ersten Kupplung (130) zwischen der ersten Eingangsseite (110) und der ersten Ausgangsseite (120);
- einer zweiten Kupplung (135) zwischen der ersten Eingangsseite (110) und der zweiten Ausgangsseite (125); und **dadurch gekennzeichnet, dass** sie weiter eingerichtet ist, mit
- einer dritten Kupplung (140) zwischen der ersten Eingangsseite (110) und der zweiten Eingangsseite (115); und
- einem Fliehkraftpendel (205),
und wobei die erste (130) und die zweite Kupplung (135) axial versetzt sind,
wobei zwei Fliehkraftpendel (205) vorgesehen sind, die auf unterschiedlichen axialen Seiten der ersten (130) und der zweiten Kupplung (135) angeordnet sind..

2. Kupplungseinrichtung (100) nach Anspruch 1, wobei das Fliehkraftpendel (205) mit der ersten Eingangsseite (110) verbunden ist.

3. Kupplungseinrichtung (100) nach einem der vorangehenden Ansprüche, wobei das Fliehkraftpendel (205) axial außerhalb der ersten (130) und der zweiten Kupplung (135) angeordnet ist.

4. Kupplungseinrichtung (100) nach einem der vorangehenden Ansprüche, wobei das Fliehkraftpendel (205) radial außerhalb der ersten (130) und der zweiten Kupplung (135) liegt.

5. Kupplungseinrichtung (100) nach einem der Ansprüche 1 bis 4, wobei die erste Eingangsseite (110) auf der radialen Außenseite der ersten (130) und der zweiten Kupplung (135) liegt und mittels eines radialen Elements bezüglich der Drehachse (105) abgestützt ist, das gleichzeitig einen Pendelflansch (210) des Fliehkraftpendels (205) bildet.

6. Kupplungseinrichtung (100) nach einem der vorangehenden Ansprüche, wobei wenigstens eine der Kupplungen (130, 135, 140) und das Fliehkraftpendel (205) in einem gemeinsamen Gehäuse (175) angeordnet sind, das teilweise mit einem flüssigen Medium (180) gefüllt ist.

7. Kupplungseinrichtung (100) nach einem der vorangehenden Ansprüche, wobei die erste Eingangsseite (110) zur Verbindung mit einem Läufer (150) einer elektrischen Maschine (145) eingerichtet ist.

8. Kupplungseinrichtung (100) nach Anspruch 8, wobei der Läufer (150) radial außen von einem Ständer (155) der elektrischen Maschine (145) umgeben ist.

9. Kupplungseinrichtung (100) nach einem der vorangehenden Ansprüche, wobei die zweite Eingangsseite (115) zur Verbindung mit einer Abtriebswelle einer Brennkraftmaschine eingerichtet ist.

## Claims

1. Coupling device (100) having:
- a first (110) and a second input side (115);
- a first (120) and a second output side (125);
- wherein the input sides (110, 115) and the output sides (120, 125) are rotatable about a common axis of rotation (105);
- a first coupling (130) between the first input side (110) and the first output side (120);
- a second coupling (135) between the first input side (110) and the second output side (125); and **characterized in that** it is further configured to comprise
- a third coupling (140) between the first input side (110) and the second input side (115); and
- a centrifugal pendulum (205),
and wherein the first (130) and second couplings (135) are axially offset,
wherein two centrifugal pendulums (205) are provided, which are arranged on different axial sides of the first (130) and the second coupling (135).

2. Coupling device (100) according to claim 1, wherein the centrifugal pendulum (205) is connected to the first input side (110).

3. Coupling device (100) according to any one of the preceding claims, wherein the centrifugal pendulum (205) is arranged axially outside the first (130) and the second coupling (135).

4. Coupling device (100) according to any one of the preceding claims, wherein the centrifugal pendulum (205) is located axially outside the first (130) and the second coupling (135).

5. Coupling device (100) according to any one of claims 1 to 4, wherein the first input side (110) lies on the radially outer side of the first (130) and the second coupling (135) and is supported with respect to the axis of rotation (105) by means of a radial element, which at the same time forms a pendulum flange (210) of the centrifugal pendulum (205).

6. Coupling device (100) according to any one of the preceding claims, wherein at least one of the couplings (130, 135, 140) and the centrifugal pendulum (205) are arranged in a common housing (175) which is partially filled with a liquid medium (180).

7. Coupling device (100) according to any one of the preceding claims, wherein the first input side (110) is configured for connection to a rotor (150) of an electric machine (145).

8. Coupling device (100) according to claim 8, wherein the rotor (150) is surrounded radially on the outside by a stator (155) of the electric machine (145).

9. Coupling device (100) according to any one of the preceding claims, wherein the second input side (115) is configured for connection to an output shaft of an internal combustion engine.

## Revendications

1. Dispositif d'embrayage (100) comprenant :
- un premier (110) et un second côté entrée (115) ;
- un premier (120) et un second côté sortie (125) ;
- les côtés entrée (110, 115) et les côtés sortie (120, 125) pouvant tourner autour d'un axe de rotation commun (105) ;
- un premier embrayage (130) entre le premier côté entrée (110) et le premier côté sortie (120) ;
- un deuxième embrayage (135) entre le premier côté entrée (110) et le second côté sortie (125) ; et **caractérisé en ce qu'**il est en outre conçu avec
- un troisième embrayage (140) entre le premier côté entrée (110) et le second côté entrée (115) ; et
- un pendule centrifuge (205),
et dans lequel le premier (130) et le deuxième embrayage (135) sont décalés axialement,
dans lequel sont prévus deux pendules centrifuges (205) qui sont disposés sur différents côtés axiaux du premier (130) et du deuxième embrayage (135).

2. Dispositif d'embrayage (100) selon la revendication 1, dans lequel le pendule centrifuge (205) est raccordé au premier côté entrée (110).

3. Dispositif d'embrayage (100) selon l'une quelconque des revendications précédentes, dans lequel le pendule centrifuge (205) est disposé axialement à l'extérieur du premier (130) et du deuxième embrayage (135).

4. Dispositif d'embrayage (100) selon l'une quelconque des revendications précédentes, dans lequel le pendule centrifuge (205) est situé radialement à l'extérieur du premier (130) et du deuxième embrayage (135).

5. Dispositif d'embrayage (100) selon l'une quelconque des revendications 1 à 4, dans lequel le premier côté entrée (110) est situé sur le côté externe radial du premier (130) et du deuxième embrayage (135) et est supporté au moyen d'un élément radial par rapport à l'axe de rotation (105), qui forme en même temps une bride pendulaire (210) du pendule centrifuge (205).

6. Dispositif d'embrayage (100) selon l'une quelconque des revendications précédentes, dans lequel au moins l'un des embrayages (130, 135, 140) et le pendule centrifuge (205) sont disposés dans un boîtier commun (175) qui est partiellement rempli d'un milieu liquide (180).

7. Dispositif d'embrayage (100) selon l'une quelconque des revendications précédentes, dans lequel le premier côté entrée (110) est conçu pour être relié à un rotor (150) d'une machine électrique (145).

8. Dispositif d'embrayage (100) selon la revendication 8, dans lequel le rotor (150) est entouré radialement à l'extérieur par un stator (155) de la machine électrique (145).

9. Dispositif d'embrayage (100) selon l'une quelconque des revendications précédentes, dans lequel le second côté entrée (115) est conçu pour être relié à un arbre de sortie d'un moteur à combustion interne.
